# EUROPEAN PATENT SPECIFICATION

(11) **EP 4 067 408 B1**
(45) Date of publication and mention of the grant of the patent: **30.07.2025**
(21) Application number: 20892648.5
(22) Date of filing: 10.11.2020
(51) Int. Cl.: C08G 69/26, C08J 5/18, C08G 69/34, C08G 69/40, C08K 5/00, C08L 77/08

(54) **FLEXIBLE POLYAMIDE FILM**
FLEXIBLE POLYAMIDFOLIE
FILM DE POLYAMIDE SOUPLE

(30) Priority: 27.11.2019 JP 2019214339
(43) Date of publication of application: 05.10.2022
(73) Proprietor: Unitika Ltd., Osaka-shi Osaka 541-8566 (JP)
(72) Inventor: TAKI, Toshio, Uji-shi, Kyoto 611-0021 (JP); MARUO, Takeshi, Uji-shi, Kyoto 611-0021 (JP); NAKAI, Makoto, Uji-shi, Kyoto 611-0021 (JP); YAGI, Yusuke, Uji-shi, Kyoto 611-0021 (JP)
(74) Representative: Novagraaf International SA
(86) International application number: PCT/JP2020/041800
(87) International publication number: WO 2021/106541

(56) References cited:
- WO-A1-2018/056459
- WO-A1-2020/085360
- GB-A- 968 171
- JP-A- 2006 509 878
- JP-A- 2014 506 614
- JP-A- 2015 129 271
- JP-A- 2017 530 218
- JP-A- 2018 203 865
- JP-A- S6 323 927
- JP-A- S61 225 213

## Description

### Technical Field

The present invention relates to a polyamide film having thermal resistance and flexibility.

### Background Art

Since polyamide films are excellent in thermal resistance and mechanical properties, development thereof in electric and electronic fields or the like has been investigated, and in recent years, applications thereof to devices, such as flexible or foldable devices, have also been investigated (for example, Patent Literatures 1 to 4). However, the conventional polyamide films having thermal resistance did not have sufficient flexibility for application to these devices.

As a method for improving flexibility of polyamide, there is a method for allowing it to have both hard segments and soft segments that is considered to be a preferred morphology having high flexibility and to form a phase-separated structure of respective segments. Conventionally, a polyamide having hard segments and soft segments often has the hard segments constructed of crystalline polyamide such as polyamide 6, polyamide 11, or polyamide 12, and the soft segments constructed of a block copolymer formed of polyether or the like, and the bond between the hard segment and the soft segment is often an ester bond.

However, the polyamide including the above structures has a problem of having a lower melting point and a lower thermal resistance than the polyester having hard segments and soft segments.

Polymerization at an elevated temperature is required for manufacture of a polyamide having a high melting point. However, at a high polymerization temperature, soft segments are decomposed and shortened in the length by water generated in condensation reaction, amino groups contained in raw material monomers, and amino groups generated in hydrolysis of the polyamide, which results in a problem of lowering a molecular weight of the obtained polyamide and exhibiting insufficient performance.

### Citation List

### Patent Literature

Patent Literature 1: Japanese Patent No. 6061814
Patent Literature 2: Japanese Patent Laid-Open No. 2000-186141
Patent Literature 3: British Patent Publication GB 968 171 A
Patent Literature 4: International Publication WO 2018/056459 A1

### Summary of Invention

### Technical Problem

An object of the present invention is to solve the above problems and provide a polyamide film forming a phase-separated structure composed of soft segments and hard segments, which is considered to be preferred as a highly flexible morphology, and having excellent flexibility and a high melting point, without including a polyether or polyester component that is more decomposable during polymerization.

### Solution to Problem

The present inventors have found, as a result of diligent efforts to solve such problems, that a polyamide film according to claim 1 including 10 to 92% by mass in total of a unit formed from an aliphatic dicarboxylic acid having 18 or more carbon atoms and/or a unit formed from an aliphatic diamine having 18 or more carbon atoms can achieve the above object and thus have completed the present invention.

The flexible polyamide film of the present invention is characterized in being a film obtained by forming a polyamide including a unit formed from an aliphatic dicarboxylic acid (A1) having 18 or more carbon atoms and/or a unit formed from an aliphatic diamine (B1) having 18 or more carbon atoms,
wherein the polyamide has a total content of 10 to 92% by mass of the unit formed from the aliphatic dicarboxylic acid (A1) having 18 or more carbon atoms and the unit formed from the aliphatic diamine (B1) having 18 or more carbon atoms, wherein the film is a biaxially stretched film and has a melting point of 240°C or higher.

According to the flexible polyamide film of the present invention, the aliphatic dicarboxylic acid (A1) having 18 or more carbon atoms is preferably a dimer acid.

According to the flexible polyamide film of the present invention, the aliphatic diamine (B1) having 18 or more carbon atoms is preferably a dimer diamine.

According to the flexible polyamide film of the present invention, the polyamide preferably includes a unit formed from a dicarboxylic acid (A2) having 12 or less carbon atoms.

According to the flexible polyamide film of the present invention, the polyamide preferably includes a unit formed from a diamine (B2) having 12 or less carbon atoms.

According to the flexible polyamide film of the present invention, the dicarboxylic acid (A2) having 12 or less carbon atoms is preferably terephthalic acid.

According to the flexible polyamide film of the present invention, the diamine (B2) having 12 or less carbon atoms is preferably 1,10-decanediamine.

According to the flexible polyamide film of the present invention, the polyamide does not preferably include a segment composed of a polyether or a polyester.

### Advantageous Effects of Invention

According to the present invention it is possible to provide a polyamide film excellent in flexibility and having a high melting point by using a polyamide including a specific amount of a unit formed from an aliphatic dicarboxylic acid having 18 or more carbon atoms and/or a unit formed from an aliphatic diamine having 18 or more carbon atoms, without including a polyether or polyester component which is apt to decompose during polymerization.

### Description of Embodiments

The flexible polyamide film of the present invention is a film obtained by forming a polyamide including a unit formed from an aliphatic dicarboxylic acid (A1) having 18 or more carbon atoms and/or a unit formed from an aliphatic diamine (B1) having 18 or more carbon atoms.

### <Polyamide>

The polyamide constructing the flexible polyamide film of the present invention needs to include the unit formed from the aliphatic dicarboxylic acid (A1) having 18 or more carbon atoms and/or the unit formed from the aliphatic diamine (B1) having 18 or more carbon atoms. In the polyamide constructing the film of the present invention, the unit formed from (A1) and/or the unit formed from (B1), form soft segments.

In the present invention, the polyamide needs a total content of the unit formed from (A1) and the unit formed from (B1) of 10 to 92% by mass, preferably of 15 to 80% by mass, more preferably of 30 to 80% by mass, and still more preferably of 40 to 75% by mass from the balance between flexibility and thermal resistance. The polyamide is less flexible at the total content of less than 10% by mass, while at the total content of more than 92% by mass, the polyamide provides a film that may be less resistant thermally, or break upon stretching or heat fixing.

In the present invention, from the viewpoints of flexibility and elongation of the polyamide, preferably it simultaneously includes the unit formed from the aliphatic dicarboxylic acid (A1) having 18 or more carbon atoms and the unit formed from the aliphatic diamine (B1) having 18 or more carbon atoms, and the mass ratio (unit formed from (A1) /unit formed from (B1)) is preferably 90/10 to 10/90, more preferably 70/30 to 10/90, and still more preferably 50/50 to 10/90.

Incidentally, it is preferred to include the unit formed from the aliphatic diamine (B1) having 18 or more carbon atoms without (A1) than to include the unit formed from the aliphatic dicarboxylic acid (A1) having 18 or more carbon atoms without (B1), from the viewpoints of flexibility and thermal resistance.

The aliphatic dicarboxylic acid (A1) having 18 or more carbon atoms is preferably formed from hydrocarbon only except for the carboxyl groups and includes, for example, hexadecanedicarboxylic acid (18 carbon atoms), octadecanedicarboxylic acid (20 carbon atoms), and dimer acid (36 carbon atoms).

Among these, (A1) is more preferably an aliphatic dicarboxylic acid having 20 or more carbon atoms, and still more preferably dimer acid because such a type of (A1) can provide polyamides having a high flexibility. Dimer acid may have unsaturated bonds, but since it is difficult to color, it is preferably hydrogenated to form all the carbon-carbon bonds into saturation.

The aliphatic diamine (B1) having 18 or more carbon atoms is preferably formed from hydrocarbon only except for the amino groups, and includes, for example, octadecanediamine (18 carbon atoms), eicosanediamine (20 carbon atoms), and dimer diamine (36 carbon atoms).

Among these, (B1) is preferably dimer diamine because it can provide polyamides having a high flexibility even if its content is small. Dimer diamine can be produced by reaction of dimer acid with ammonia followed by dehydration, cyanation and reduction. Dimer diamine may have unsaturated bonds, but since it is difficult to color, it is preferably hydrogenated to form all the bonds into saturation.

In the present invention, other units in the polyamide mainly form hard segments. The other units are different from the unit formed from the aliphatic dicarboxylic acid (A1) having 18 or more carbon atoms and the unit formed from the aliphatic diamine (B1) having 18 or more carbon atoms.

A unit for constructing the hard segments is not particularly limited, but is preferably a unit formed from a dicarboxylic acid (A2) having 12 or less carbon atoms or a unit formed from a diamine (B2) having 12 or less carbon atoms.

The dicarboxylic acid (A2) having 12 or less carbon atoms includes, for example, sebacic acid (10 carbon atoms), azelaic acid (9 carbon atoms), adipic acid (6 carbon atoms), terephthalic acid (8 carbon atoms), isophthalic acid (8 carbon atoms), and orthophthalic acid (8 carbon atoms). Among these, because the flexibility is improved, the dicarboxylic acid having 8 or more carbon atoms is preferably included.

Moreover, the diamine (B2) having 12 or less carbon atoms includes dodecanediamine (12 carbon atoms), undecanediamine (11 carbon atoms), decanediamine (10 carbon atoms), nonanediamine (9 carbon atoms), octanediamine (8 carbon atoms), hexanediamine (6 carbon atoms), butanediamine (4 carbon atoms). Among these, because the flexibility is improved, a diamine having 5 or more carbon atoms is preferably included and a diamine having 8 or more carbon atoms is more preferably included.

In the present invention, the hard segments preferably consist of units composing a highly crystalline polyamide. The highly crystalline polyamide is preferably a semicrystalline polyamide consisting of an aromatic dicarboxylic acid and an aliphatic diamine, and includes, for example, polyamide 4T, polyamide 9T, polyamide 10T, and polyamide 12T, with polyamide 10T being preferred among these because of favorable balance between thermal resistance and crystallinity thereof. Therefore, for composing the hard segments, (A2) is preferably terephthalic acid, and (B2) is preferably butanediamine, nonanediamine, decanediamine, or dodecanediamine, and more preferably 1,10-decanediamine.

When units for composing the hard segments are units composing a highly crystalline polyamide, the polyamide thus obtained has an improved thermal resistance and forms a structure highly phase-separated between the hard and soft segments, which improves the flexibility.

Soft segments formed of a unit formed from an aliphatic dicarboxylic acid (A1) having 18 or more carbon atoms and/or a unit formed from an aliphatic diamine (B1) having 18 or more carbon atoms tend to have a shorter segment length, compared with soft segments formed of polyether or polyester. As the soft segments are shortened in the segment length, it may be difficult to form a phase-separated structure with the hard segments. However, by selecting the units for composing the highly crystalline polyamide as the units composing the hard segments, a phase-separated structure can be formed even if the soft segment length is short.

In the present invention, the polyamide preferably does not include any segment formed of polyether or polyester that is likely to decompose upon polymerization. The polyether includes, for example, polyoxyethylene glycol, polyoxypropylene glycol, polyoxytetramethylene glycol, and polyoxyethylene·polyoxypropylene glycol, and the polyester includes, for example, polyethylene adipate, polytetramethylene adipate, and polyethylene sebacate. Polyamides including segments formed of polyether or polyester may be decomposed when a polymerization temperature is elevated.

In the present invention, the polyamide may include a terminal blocking agent for adjusting a degree of polymerization, inhibiting decomposition of a product, inhibiting coloring, etc. The terminal blocking agent includes, for example, monocarboxylic acids such as acetic acid, lauric acid, benzoic acid and stearic acid, and monoamines such as octylamine, cyclohexylamine, aniline, stearylamine, etc. The terminal blocking agent may be used alone or in combination thereof. The content of the terminal blocking agent is not particularly limited, but is usually 0 to 10 mol% relative to the total molar amount of the dicarboxylic acid and the diamine.

### <Polyamide film>

The flexible polyamide film of the present invention is obtained by forming the polyamide.

The flexible polyamide film of the present invention is excellent in thermal resistance, and a melting point, which is an index of thermal resistance, needs to be 240°C or higher, preferably 250°C or higher, more preferably 270°C or higher, and still more preferably 300°C or higher.

Moreover, the flexible polyamide film of the present invention is excellent in flexibility, and an elastic modulus that is an index of flexibility is preferably 2,500 MPa or less, more preferably 2,000 MPa or less, and still more preferably 1,500 MPa or less.

Moreover, the flexible polyamide film of the present invention has low water absorption, leading to small changes in dimensions and mechanical properties due to water absorption, and a coefficient of water absorption is preferably 2.5% or less, preferably 2.0% or less, more preferably 1.5% or less, and still more preferably 1.0% or less.

Further, the flexible polyamide film of the present invention has a low dielectric loss tangent and low dielectric constant and is excellent in dielectric property, and is also excellent in insulating property.

### <Production of polyamide>

In the present invention, the method for producing the polyamide is not particularly limited, and the polyamide can be produced by a normal polymerization method including, for example, a method for polymerizing raw material monomers by removing condensed water from a system while heating them in a pressure vessel equipped with a stirrer or a continuous polymerization facility.

A catalyst may be used in the production of the polyamide, if necessary. The catalyst includes, for example, phosphoric acid, phosphorous acid, hypophosphorous acid or a salt thereof. The content of the catalyst is not particularly limited, but is usually 2 mol% or less based on the total molar amount of the dicarboxylic acid and the diamine.

Moreover, in the production of the polyamide, an organic solvent or water may be added as needed.

In the production of the polyamide, the polymerization may be carried out in a closed system or at normal pressure. When it is carried out in the closed system, since the pressure may increase due to volatilization of the monomer or generation of condensed water, etc., the pressure should be preferably appropriately controlled. On the other hand, when the boiling point of the monomer used is high and the monomer does not flow out of the system without pressurization, it can be polymerized at normal pressure. When the raw material monomers are, for example, a combination of dimer acid, dimer diamine, terephthalic acid, and decanediamine, it can be polymerized at normal pressure.

In the production of the polyamide, it is preferred to carry out the polymerization in a nitrogen atmosphere or in a vacuum in order to prevent oxidative deterioration.

The polymerization temperature is not particularly limited, but is usually 150 to 300°C. In order to inhibit decomposition and deterioration reaction of the obtained polyamide, the polymerization is preferably carried out at a temperature not exceeding 300°C and preferably carried out at a temperature equal to or lower than the melting point of the polyamide. When polymerized at a temperature equal to or lower than the melting point of the polyamide, the hard segment component remains precipitated, however the soft segment component is in a molten state, so that the entire reaction product has its fluidity. Therefore, the polymerization can be carried out with an existing melt polymerization equipment and by a conventional process for the polyamide. In this case, the polymerization of the hard segments proceeds in a state like solid phase polymerization. The method for polymerizing at a temperature equal to or below the melting point is particularly effective in polymerization of a polyamide having a high melting point of 280°C or higher at which the polyamide is likely to decompose due to the high polymerization temperature.

The polyamide after polymerization may be extruded into strands as pellets, or may be hot-cut or underwater-cut into pellets.

In the manufacturing method of the polyamide, solid phase polymerization may be further carried out in order to increase a molecular weight. The solid-phase polymerization is particularly effective when a viscosity at the time of polymerization is high, the operation becomes difficult, etc. The solid-phase polymerization is preferably carried out by heating at a temperature lower than the melting point of the resin for 30 minutes or longer under a flow of an inert gas or under reduced pressure, and it is more preferably carried out by heating for 1 hour or longer.

### <Production of polyamide film>

The flexible polyamide film of the present invention can be produced by melting the polyamide at 240 to 340°C for 3 to 15 minutes, then extruding it into a sheet through a T-die, and bringing the extruded material into close contact on a drum controlled a temperature of -10 to 80°C, and then cooling it. The unstretched film obtained can be used as the polyamide film of the present invention in the unstretched state, but is usually used after having been stretched. The stretching is carried out biaxially. The polyamide in the film is preferably oriented and crystallized by the stretching. Examples of the stretching method include a simultaneous stretching method and a sequential stretching method.

Examples of the simultaneous biaxial stretching method includes a method for subjecting an unstretched film to the simultaneous biaxial stretching and subsequently to a heat fixing treatment. The stretching is preferably carried out at 30 to 150°C in both a width direction (hereinafter, may be abbreviated as "TD") and a longitudinal direction (hereinafter, may be abbreviated as "MD") by 1.5 to 5 times of magnification. The heat fixing treatment is preferably carried out at 150 to 300°C for several seconds with a relaxation of TD being a few percent. The film may be preliminarily stretched in MD by about 1 to 1.2 times before the simultaneous biaxial stretching.

An example of the sequential biaxial stretching method is a method for subjecting an unstretched film to heat treatments such as roll heating and infrared heating, then stretching it in MD, and then continuously subjecting the stretched film to TD stretching and heat fixing treatment. The MD stretching is preferably carried out at 30 to 150°C at 1.5 to 5 times of magnification. The TD stretching is preferably carried out at 30 to 150°C as in the case of the MD stretching. The ratio of TD stretching is preferably 2 times or more and more preferably 3 times or more. The heat fixing treatment is preferably carried out at 150 to 300°C for several seconds with a relaxation in TD being a few percent.

Examples of the method for stretching the polyamide film include a flat sequential biaxial stretching method, a flat simultaneous biaxial stretching method, and a tubular method. Among them, the flat simultaneous biaxial stretching method is preferably adopted from the viewpoint of improving thickness accuracy of the film and uniformizing physical properties of the film in MD. A stretching apparatus for adopting the flat simultaneous biaxial stretching method include, for example, a screw type tenter, a pantograph type tenter, and a linear motor drive clip type tenter.

The heat treatment method after stretching includes, for example, publicly known methods such as a method of blowing hot air, a method of irradiating infrared rays, and a method of irradiating microwaves. Among them, the method of blowing hot air is preferred because it enables uniform and accurate heating.

The flexible polyamide film obtained may be formed into a single sheet, or may be formed into a film roll by being wound on a take-up roll. From the viewpoint of productivity when used for various applications, the film is preferably in the film roll. In the case of being formed into the film roll, it may have been slit to a desired width.

It is noted that the polyamide film production apparatus is preferably subjected to a treatment of reducing roughness of surfaces of a cylinder, a molten section of a barrel, a measuring section, a single tube, a filter, a T-die, etc., in order to prevent the polyamide from staying on their surfaces. Examples of the method for reducing the surface roughness includes a method for modifying it with a substance having a low polarity, and a method for vapor-depositing silicon nitride or diamond-like carbon on the surface thereof.

### <Additives>

The flexible polyamide film of the present invention preferably includes a thermal stabilizer in order to improve thermal stability upon film formation, prevent deterioration of film strength and elongation, and prevent deterioration of the film due to oxidation and decomposition upon use. Examples of the thermal stabilizer includes, for example, a hindered phenol thermal stabilizer, a hindered amine thermal stabilizer, a phosphorus-based thermal stabilizer, a sulfur-based thermal stabilizer, and a bifunctional thermal stabilizer.

Examples of the hindered phenol thermal stabilizer include Irganox 1010 (registered trademark) (pentaerythritol tetrakis[3-(3,5-di-tert-butyl-4-hydroxyphenyl)propionate], manufactured by BASF Japan Ltd.), Irganox 1076 (registered trademark) (octadecyl-3-(3,5-di-tert-butyl-4-hydroxyphenyl)propionate, manufactured by BASF Japan Ltd.), Cyanox1790 (registered trademark) (1,3,5-tris(4-t-butyl-3-hydroxy-2,6-dimethylbenzyl)isocyanurate, manufactured by Solvay S. A.), Irganox1098 (registered trademark) (N,N'-(hexane-1,6-diyl)bis[3-(3,5-di-tert-butyl-4-hydroxyphenyl)propionamide], manufactured by BASF Japan Ltd.), Sumilizer GA-80 (registered trademark) (3,9-bis[2-{3-(3-t-butyl-4-hydroxy-5-methylphenyl)propionyloxy}-1,1-dimethylethyl]-2,4,8,10-tetraoxaspiro[5.5]undecane, manufactured by Sumitomo Chemical Co., Ltd.).

Examples of the hindered amine thermal stabilizer include Nylostab S-EED (registered trademark) (N,N'-bis-2,2,6,6-tetramethyl-4-piperidinyl-1,3-benzene dicarboxyamide, manufactured by Clariant Japan, K. K.).

Examples of the phosphorus-based thermal stabilizer include Irgafos 168 (registered trademark) (tris(2,4-di-tert-butylphenyl)phosphite, manufactured by BASF Japan Ltd.), Irgafos 12 (registered trademark) (6,6',6"-[nitrilotris(ethyleneoxy)]tris(2,4,8,10-tetra-tert-butyldibenzo[d,f][1,3,2]dioxaphosphepine), manufactured by BASF Japan Ltd.), Irgafos38 (registered trademark) (bis(2,4-di-tert-butyl)-6-methylphenyl)ethylphosphite), manufactured by BASF Japan Ltd.), ADKSTAB329K (registered trademark) (tris(mono-dinonylphenyl)phosphite, manufactured by ADEKA CORPORATION), ADKSTAB PEP36 (registered trademark) (bis(2,6-di-tert-butyl-4-methylphenyl)pentaerythritol-di-phosphite, manufactured by ADEKA CORPORATION), Hostanox P-EPQ (registered trademark) (tetrakis(2,4-di-tert-butylphenyl)-4,4'-biphenyldiphosphonite, manufactured by Clariant AG), GSY-P101 (registered trademark) (tetrakis(2,4-di-tert-butyl-5-methylphenyl)-4,4'-biphenylenediphosphonite, manufactured by Sakai Chemical Industry Co., Ltd.), SumilizerGP (registered trademark) (6-[3-(3-tert-butyl-4-hydroxy-5-methylphenyl)propoxy]-2,4,8,10-tetra-tert-butyldibenzo[d,f][1,3,2]-dioxaphosphepine, manufactured by Sumitomo Chemical Co., Ltd.).

Examples of the sulfur-based thermal stabilizer include DSTP "Yoshitomi" (registered trademark) (distearylthiodipropionate, manufactured by Mitsubishi Chemical Corporation) and Seenox 412S (registered trademark) (pentaerythritol tetrakis-3-dodecylthiopropionate, manufactured by SHIPRO KASEI KAISHA LTD.).

Examples of the bifunctional thermal stabilizer include Sumilizer GM (registered trademark) (2-tert-butyl-6-(3-tert-butyl-2-hydroxy-5-methylbenzyl)-4-methylphenyl acrylate, manufactured by Sumitomo Chemical Co., Ltd.), and SumilizerGS (registered trademark) (2-[1-(2-hydroxy-3,5-di-tert-pentylphenyl)ethyl]-4,6-di-tert-pentylphenyl acrylate, manufactured by Sumitomo Chemical Co., Ltd.).

From the viewpoint of preventing deterioration of film strength, a hindered phenol thermal stabilizer is preferred. The thermal decomposition temperature of the hindered phenol thermal stabilizer is preferably 320°C or higher and more preferably 350°C or higher. Examples of the hindered phenol thermal stabilizer having a thermal decomposition temperature of 320°C or higher include Sumilizer GA-80. Moreover, if the hindered phenol thermal stabilizer has an amide bond, deterioration of the film strength can be prevented. The hindered phenol thermal stabilizer having the amide bond is, for example, Irganox 1098. Further, combination of a bifunctional thermal stabilizer with the hindered phenol thermal stabilizer for use can further reduce the deterioration of film strength.

These thermal stabilizers may be used singly or in combination of two or more. For example, if the hindered phenol thermal stabilizer and the phosphorus-based thermal stabilizer are combined for use, it is possible to prevent a pressure rise of a filter for raw material filtration upon film formation as well as to prevent deterioration of the film strength. In addition, if the hindered phenol thermal stabilizer, the phosphorus-based thermal stabilizer, and the bifunctional thermal stabilizer are combined for use, it is possible to prevent a pressure rise of the filter for raw material filtration upon film formation and further to prevent the deterioration of the film strength.

As a combination of the hindered phenol thermal stabilizer and the phosphorus-based thermal stabilizer, a combination of Sumilizer GA-80 or Irganox 1098 and Hostanox P-EPQ or GSY-P101 is preferred. As a combination of the hindered phenol thermal stabilizer, the phosphorus-based thermal stabilizer, and the bifunctional thermal stabilizer, a combination of Sumilizer GA-80 or Irganox 1098, Hostanox P-EPQ or GSY-P101, and Sumilizer GS is preferable, and a combination of Sumilizer GA-80, GSY-P101 and Sumilizer GS is more preferable.

A content of the thermal stabilizer in the flexible polyamide film of the present invention is preferably 0.01 to 2 parts by mass and more preferably 0.05 to 1 part by mass relative to 100 parts by mass of the polyamide. When the content of the thermal stabilizer is 0.01 to 2 parts by mass, thermal decomposition can be inhibited more efficiently. In the case where two or more types of thermal stabilizers are combined for use, it is preferable that the discrete content of each thermal stabilizer and the total content of the thermal stabilizers are preferably within the above ranges.

The flexible polyamide film of the present invention may include lubricant particles in order to improve slipperiness. Examples of the lubricant particles include inorganic particles such as silica, alumina, titanium dioxide, calcium carbonate, kaolin, and barium sulfate, and organic fine particles such as acrylic resin particles, melamine resin particles, silicone resin particles, and crosslinked polystyrene particles.

The flexible polyamide film of the present invention may include various additives in addition to the thermal stabilizers and lubricant particles, if necessary, as long as the effects of the present invention are not impaired. The additives include colorants such as pigments and dyes, color inhibitors, antioxidants different from the above thermal stabilizers, weather resistance improvers, flame retardants, plasticizers, release agents, strengthening agents, and modifications, antistatic agents, UV absorbers, anti-fogging agents, and various polymers. Examples of the pigment include titanium oxide. Examples of the weather resistance improver include benzotriazole compounds. Examples of the flame retardant include brominated flame retardants and phosphorus-based flame retardants. Examples of the strengthening agent include talc. It is noted that the various additives may be added at any stage upon production of the film.

### <Film processing>

The flexible polyamide film of the present invention can be subjected to a treatment for improving adhesiveness of its surface, if necessary. Examples of the method of treatment for improving the adhesiveness include a corona treatment, a plasma treatment, an acid treatment, and a flame treatment.

A surface of the flexible polyamide film of the present invention can be coated with various coating agents in order to impart functions such as easy adhesion, an antistatic property, a release property, and a gas barrier property.

The flexible polyamide film of the present invention may be layered with an inorganic substance such as a metal or an oxide thereof, a different polymer, paper, a woven fabric, a non-woven fabric, wood or the like.

### <Film applications>

The flexible polyamide film of the present invention is excellent in heat resistance and flexibility. Therefore, the stretched flexible polyamide film of the present invention can be suitably used as a packaging material for pharmaceuticals; a packaging material for food such as retort food; a packaging material for electronic components such as semiconductor packages; electrical insulating materials for motors, transformers, cables, etc.; dielectric materials for capacitor applications, etc.; materials for magnetic tapes such as cassette tapes, magnetic tapes for data storage for digital data storage, video tapes, etc.; protective plates for solar cell substrates, liquid crystal plates, conductive films, display equipment, etc.; electronic board materials such as LED mounting boards, flexible printed wiring boards, flexible flat cables; heat resistant adhesive tapes such as coverlay films for flexible printed wiring, heat resistant masking tapes, industrial process tapes; heat resistant bar code labels; heat-resistant reflectors; various release films; heat resistant adhesive base films; photographic films; forming materials; agricultural materials; medical materials; civil engineering and building materials; filter films, etc., household and industrial materials; and films for textile materials. Examples

The present invention will be described in more detail with reference to the following examples.

### A. Evaluation method

The physical properties of polyamides and polyamide films were measured by the following methods.

### (1) Composition

The polyamide and polyamide film obtained were analyzed by ¹H-NMR using a high-resolution nuclear magnetic resonance apparatus (ECA-500NMR manufactured by JEOL Ltd.), and the resin composition was determined from the peak intensity of each copolymer component (resolution: 500 MHz, solvent: mixed solvent with a volume ratio of deuterated trifluoroacetic acid and deuterated chloroform of 4/5, temperature: 23°C).

### (2) Melting point

A few mg of the polyamide films obtained was cut, raised to 350°C at a rising rate of temperature of 20°C/min by using a differential scanning calorimeter DSC-7 (manufactured by PerkinElmer, Inc.), and then held at 350°C for 5 minutes, lowered to 25°C at a cooling rate of temperature of 20°C/min, and further held at 25°C for 5 minutes. A top of the endothermic peak observed when the sample was raised again at a rising rate of temperature of 20°C/min, was defined as a melting point.

### (3) Tensile strength at break, tensile elongation at break, and tensile elastic modulus of stretched film

Measurement was carried out in an environment of temperature of 20°C and humidity of 65% according to JIS K 7127. The size of the sample was 10 mm × 150 mm, the initial distance between chucks was 100 mm, and the tensile velocity was 500 mm/min.

### (4) Coefficient of water absorption

The obtained polyamide film was subjected to a water absorption treatment in pure water at 23°C for 2 days, then the water on the surface was wiped off, and the weight change before and after the water absorption treatment was measured to determine the coefficient of water absorption.

### B. Raw material

The following raw materials were used.
·Dimer acid: Pripole 1009 manufactured by Croda International plc.
·Dimer diamine: Priamine 1075 manufactured by Croda International plc.
·Thermal stabilizer: Sumilizer GA-80, manufactured by Sumitomo Chemical Co., Ltd.

### Production example

### ·Polyamide P1

In a reaction vessel equipped with a heating mechanism and a stirring mechanism, 4.7 parts by mass of dimer acid, 4.5 parts by mass of dimer diamine, 44.5 parts by mass of terephthalic acid, 46.2 parts by mass of 1,10-decanediamine, and 0.1 parts by mass of sodium hypophosphite monohydrate, were charged.

Thereafter, the mixture was heated to 260°C with stirring, and polymerization was carried out under a nitrogen stream at normal pressure and 260°C for 5 hours while removing condensed water from the system. During the polymerization, the system was in suspension.

After completion of the polymerization, the product was removed and cut to obtain polyamide P1.

### ·Polyamides P2 to P8

Polyamides P2 to P8 were obtained by carrying out the same operation as in Polyamide P1 except that the monomers to be charged into the reaction vessel were changed as shown in Table 1.

### ·Polyamide P9

To an autoclave 24.8 parts by mass of 1,4-butanediamine, 17.6 parts by mass of dimer diamine, and 18 parts by mass of dimer acid were added to produce a salt.

Then, 39.6 parts by mass of adipic acid was added. The mixture was heated from 37°C at 0 barg to 204°C at 11 barg in 35 minutes. Subsequently the mixture was maintained at 205°C for 42 minutes and increased to a pressure of 13.6 barg. Next, the reaction mixture was released into a vessel with an inert atmosphere to obtain polyamide as a solid powder. The prepolymer thus obtained was subsequently pulverized into particles of size between 1 and 20 mm, followed by post-condensation in a flow of N₂/H₂O (1800/700 g/hour) at 230°C over 24 hours to obtain polyamide P9.

### ·Polyamide P10

Into a powder stirring device equipped with a heating mechanism, 49.0 parts by mass of terephthalic acid and 0.1 parts by mass of sodium hypophosphite monohydrate were charged. While stirring heating at 170°C, 50.9 parts by mass of 1,10-decanediamine was added little by little over 3 hours to obtain a salt. Then, the salt was heated to 250°C with stirring, and polymerization was carried out under a nitrogen stream at normal pressure and 250°C for 7 hours while removing condensed water from the system. After completion of the polymerization, the product was removed to obtain polyamide P10.

### ·Polyamide P11

Into a reaction vessel equipped with a heating mechanism and a stirring mechanism, 51.3 parts by mass of dimer acid, 48.6 parts by mass of dimer diamine, and 0.1 parts by mass of sodium hypophosphite monohydrate were charged.

Subsequently, the mixture was heated to 260°C while stirring, and polymerization was carried out under a nitrogen stream at normal pressure and 260°C for 5 hours while removing condensed water from the system. During the polymerization, the system was in a uniform molten state. After completion of the polymerization, the product was removed and cut to obtain polyamide P11.

### ·Polyamide P12

51.0 parts by mass of polyoxytetramethylene glycol (PTMG1000) having amino groups instead of the hydroxyl groups at both ends, and having number average molecular weight of 1000, 28.3 parts by mass of terephthalic acid, 20.6 parts by mass of 1,10-decanediamine, and 0.1 parts by mass of sodium hypophosphite monohydrate were charged in a reaction vessel equipped with a heating mechanism and a stirring mechanism, heated to 250°C with stirring, and polymerization was carried out for 5 hours under a nitrogen stream at normal pressure and 250°C while releasing generated water vapor. During the polymerization, the system was in suspension.

After completion of the polymerization, the product was removed and cut, however, the polyamide P12 was brittle and unsuitable for practical use.

Table 1 shows the charging compositions of the obtained polyamides.

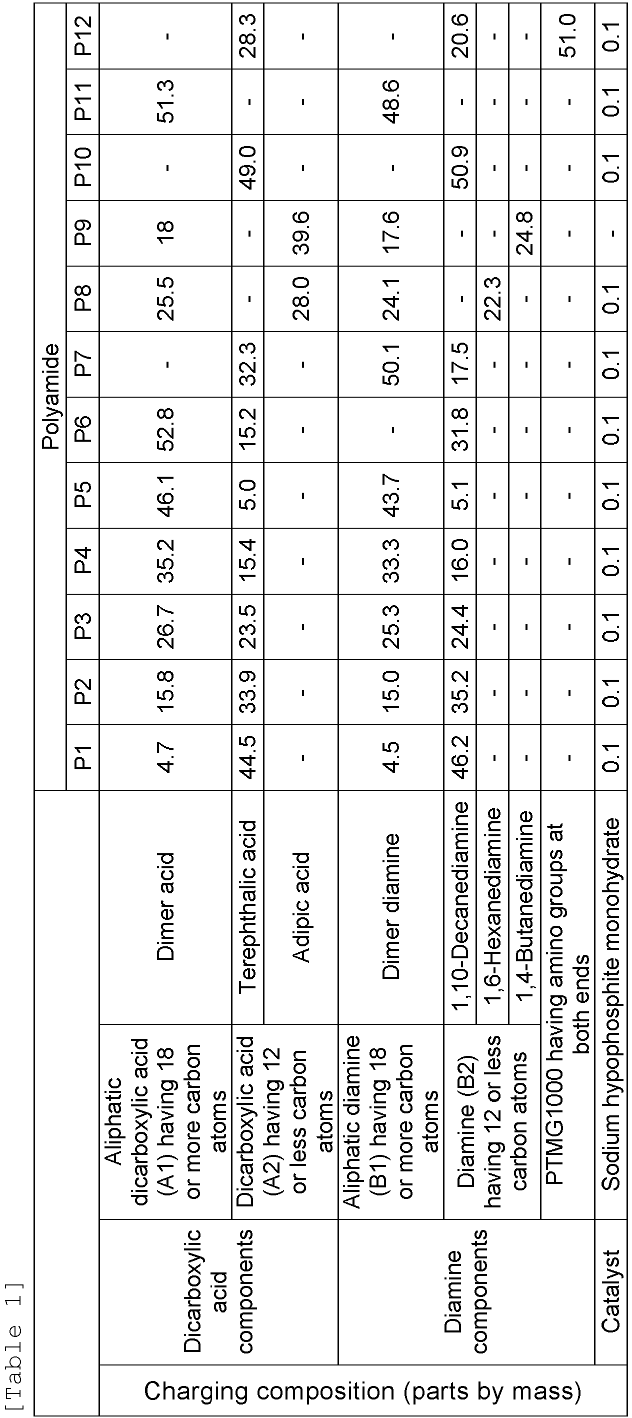

### Example 1 (simultaneously biaxially stretched film)

100 parts by mass of polyamide P1 and 0.4 parts by mass of SumilizerGA-80 were dry-blended, put into a twin-screw extruder having a cylinder temperature of 330°C and a screw diameter of 26 mm, melt-kneaded, and extruded into a strand shape followed by cooling and cutting to obtain pellets.

The obtained pellets were charged into a single-screw extruder having a cylinder temperature of 330°C and a screw diameter of 50 mm and melted, and the molten polymer was filtered by a metal fiber sintered filter ("NF-13", nominal filtration diameter: 60 µm, manufactured by Nippon Seisen Co., Ltd.), then extruded into a film from a T-die at 330°C, brought into close contact on a cooling roll at 10°C by an electrostatic application method, and cooled to obtain an unstretched polyamide film with substantially no orientation.

When a resin composition of the polyamide components of the obtained unstretched film was determined, it was the same as the resin composition of the polyamide used.

While gripping both ends of the obtained unstretched polyamide film with clips, biaxial stretching was carried out with a flat simultaneous biaxial stretching machine. The stretching conditions included a temperature of the preheated section of 80°C, a temperature of the stretched section of 80°C, a stretching strain rate in MD of 2400%/min, a stretching strain rate in TD of 2400%/min, a stretching ratio in MD of 2.3 times, and a stretching ratio in TD of 2.3 times. After stretching, the film was continuously heat-fixed at 250°C in the same tenter of the biaxial stretching machine and subjected to a relaxation treatment by 6% in the width direction of the film to obtain a biaxially stretched polyamide film.

When the resin composition of the polyamide components of the obtained stretched film was determined, it was the same as the resin composition of the polyamide used and the resin composition of the polyamide components of the unstretched film.

### Examples 2, 4 to 7, 9 to 14, Comparative Example 1 (simultaneously biaxially stretched film)

A biaxially stretched polyamide film was obtained by carrying out the same operation as in Example 1 except that the type of polyamides used and the production conditions were changed as shown in Tables 2 and 3.

Example 3 does not form part of the claimed invention.

### Example 3 (unstretched film)

By using polyamide P3, the same operation as in Example 1 was carried out to obtain a substantially unoriented unstretched polyamide film, which was evaluated as a flexible polyamide film.

When the resin composition of the polyamide components of the obtained unstretched film was determined, it was the same as the resin composition of the polyamide used.

### Example 8 (sequentially biaxially stretched film)

The unstretched polyamide film obtained in Example 3 was biaxially stretched by a flat sequential axial stretching machine.

First, the unstretched film was heated to 80°C by roll heating, infrared heating, or the like, and stretched 3.0 times in MD at a stretching strain rate of 2400%/min to obtain a stretched film in MD.

Subsequently, while gripping both ends of the film in TD with clips of the TD stretching machine, TD stretching was continuously carried out. The temperature of the preheated section in TD stretching was 85°C, the temperature of the stretched section was 85°C, the stretching strain rate was 2400%/min, and the stretching ratio in TD was 3.0 times. Then, the film was heat-fixed in the same tenter of the TD stretching machine at 250°C, and subjected to a relaxation treatment by 6% in TD of the film to obtain a biaxially stretched polyamide film.

### Comparative Example 2 (unstretched film)

The same operation as in Example 3 was carried out except that the type of polyamide used and the production conditions were changed as shown in Table 3, to obtain a substantially unoriented unstretched polyamide film.

### Comparative Example 3 (simultaneously biaxially stretched film)

By using the unstretched film obtained in Comparative Example 2, the same operation as in Example 1 was carried out to obtain a biaxially stretched polyamide film, however, the film was broken upon heat fixing and a biaxially stretched polyamide film could not be obtained.

Tables 2 and 3 show the compositions of the polyamides used, the production conditions of the films, and the characteristics of the obtained polyamide films.

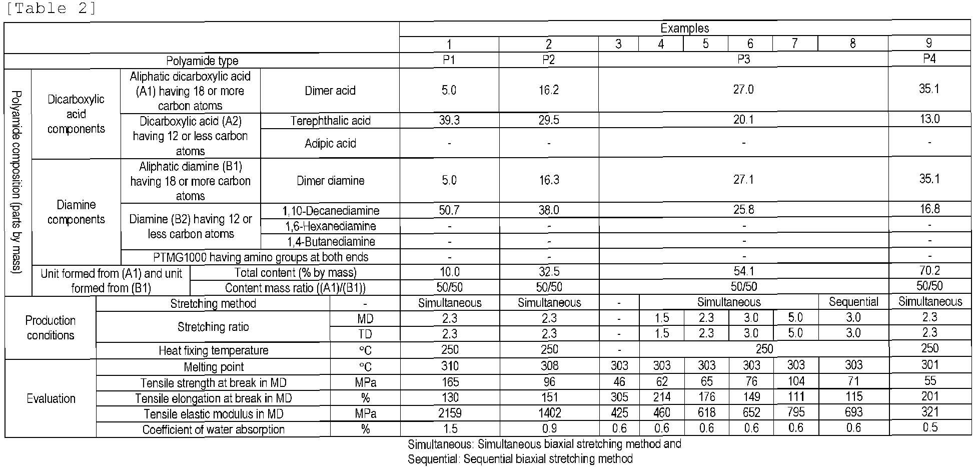

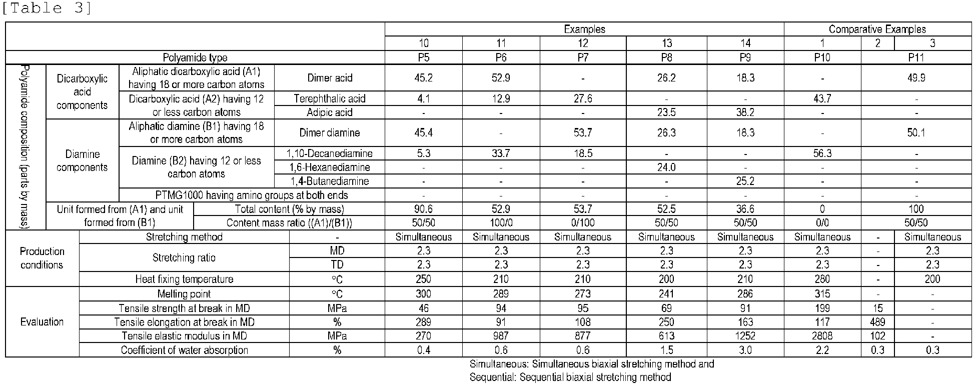

The polyamide films of Examples 1 to 14 each had the total content of the unit formed from the aliphatic dicarboxylic acid (A1) having 18 or more carbon atoms and the unit formed from the aliphatic diamine (B1) having 18 or more carbon atoms in the polyamide, of 10 to 92% by mass, whereby all of them were excellent in flexibility and had a melting point of 240°C or higher and the excellent heat resistance.

Comparison of Examples 1 to 13 with Example 14 demonstrates that the polyamide film obtained by having used the diamine having 5 or more carbon atoms as the diamine (B2) having 12 or less carbon atoms, has a lower coefficient of water absorption.

The polyamide film of Comparative Example 1 was inferior in flexibility because of containing neither the unit formed from (A1) nor the unit formed from (B1) and using the polyamide having no soft segments.

The polyamide in Comparative Example 2 had the total content of the unit formed from the aliphatic dicarboxylic acid (A1) having 18 or more carbon atoms and the unit formed from the aliphatic diamine (B1) having 18 or more carbon atoms of more than 92% by mass, whereby the melting point could not be confirmed, and the film after biaxial stretching broke upon heat fixing and was inferior in heat resistance.

## Claims

1. A flexible polyamide film obtained from a polyamide comprising a unit formed from an aliphatic dicarboxylic acid (A1) having 18 or more carbon atoms and/or a unit formed from an aliphatic diamine (B1) having 18 or more carbon atoms,
wherein the polyamide has a total content of 10 to 92% by mass of the unit formed from the aliphatic dicarboxylic acid (A1) having 18 or more carbon atoms and the unit formed from the aliphatic diamine (B1) having 18 or more carbon atoms,
wherein the film is a biaxially stretched film and has a melting point of 240°C or higher, when the melting point is measured according to the method identified in the description.

2. The flexible polyamide film according to claim 1, wherein the aliphatic dicarboxylic acid (A1) having 18 or more carbon atoms is dimer acid.

3. The flexible polyamide film according to claim 1 or 2, wherein the aliphatic diamine (B1) having 18 or more carbon atoms is dimer diamine.

4. The flexible polyamide film according to any of claims 1 to 3, wherein the polyamide comprises a unit formed from dicarboxylic acid (A2) having 12 or less carbon atoms.

5. The flexible polyamide film according to any one of claims 1 to 4, wherein the polyamide comprises a unit formed from a diamine (B2) having 12 or less carbon atoms.

6. The flexible polyamide film according to claim 4, wherein the dicarboxylic acid (A2) having 12 or less carbon atoms is terephthalic acid.

7. The flexible polyamide film according to claim 5, wherein the diamine (B2) having 12 or less carbon atoms is 1,10-decanediamine.

8. The flexible polyamide film according to any one of claims 1 to 7, wherein the polyamide comprises no segments formed of polyether or polyester.

## Patentansprüche

1. Flexible Polyamidfolie, die von einem Polyamid erhalten wird, das eine Einheit, die aus einer aliphatischen Dicarbonsäure (A1), die 18 oder mehr Kohlenstoffatome aufweist, gebildet ist, und/oder eine Einheit umfasst, die aus einem aliphatischen Diamin (B1) gebildet ist, das 18 oder mehr Kohlenstoffatome aufweist,
wobei das Polyamid einen Gesamtgehalt von 10 bis 92 Masse- % der Einheit, die aus der aliphatischen Dicarbonsäure (A1), die 18 oder mehr Kohlenstoffatome aufweist, gebildet ist, und der Einheit aufweist, die aus dem aliphatischen Diamin (B1) gebildet ist, das 18 oder mehr Kohlenstoffatome aufweist,
wobei die Folie eine biaxial gestreckte Folie ist und einen Schmelzpunkt von 240°C oder höher aufweist, wenn der Schmelzpunkt gemäß dem in der Beschreibung identifizierten Verfahren gemessen wird.

2. Flexible Polyamidfolie nach Anspruch 1, wobei die aliphatische Dicarbonsäure (A1), die 18 oder mehr Kohlenstoffatome aufweist, Dimersäure ist.

3. Flexible Polyamidfolie nach Anspruch 1 oder 2, wobei das aliphatische Diamin (B1), das 18 oder mehr Kohlenstoffatome aufweist, Dimerdiamin ist.

4. Flexible Polyamidfolie nach einem der Ansprüche 1 bis 3, wobei das Polyamid eine Einheit umfasst, die aus Dicarbonsäure (A2) gebildet ist, die 12 oder weniger Kohlenstoffatome aufweist.

5. Flexible Polyamidfolie nach einem der Ansprüche 1 bis 4, wobei das Polyamid eine Einheit umfasst, die aus einem Diamin (B2) gebildet ist, das 12 oder weniger Kohlenstoffatome aufweist.

6. Flexible Polyamidfolie nach Anspruch 4, wobei die Dicarbonsäure (A2), die 12 oder weniger Kohlenstoffatome aufweist, Terephthalsäure ist.

7. Flexible Polyamidfolie nach Anspruch 5, wobei das Diamin (B2), das 12 oder weniger Kohlenstoffatome aufweist, 1,10-Decandiamin ist.

8. Flexible Polyamidfolie nach einem der Ansprüche 1 bis 7, wobei das Polyamid keine Segmente umfasst, die aus Polyether oder Polyester gebildet sind.

## Revendications

1. Film de polyamide flexible obtenu à partir d'un polyamide comprenant un motif formé à partir d'un acide dicarboxylique aliphatique (A1) ayant 18 atomes de carbone ou plus et/ou un motif formé à partir d'une diamine aliphatique (B1) ayant 18 atomes de carbone ou plus,
dans lequel le polyamide a une teneur totale en le motif formé à partir de l'acide dicarboxylique aliphatique (A1) ayant 18 atomes de carbone ou plus et en le motif formé à partir de la diamine aliphatique (B1) ayant 18 atomes de carbone ou plus de 10 à 92 % en masse,
lequel film est un film à étirement biaxial et a un point de fusion de 240°C ou plus, quand le point de fusion est mesuré conformément au procédé identifié dans la description.

2. Film de polyamide flexible selon la revendication 1, dans lequel l'acide dicarboxylique aliphatique (A1) ayant 18 atomes de carbone ou plus est un acide dimère.

3. Film de polyamide flexible selon la revendication 1 ou 2, dans lequel la diamine aliphatique (B1) ayant 18 atomes de carbone ou plus est une diamine dimère.

4. Film de polyamide flexible selon l'une quelconque des revendications 1 à 3, dans lequel le polyamide comprend un motif formé à partir d'acide dicarboxylique (A2) ayant 12 atomes de carbone ou moins.

5. Film de polyamide flexible selon l'une quelconque des revendications 1 à 4, dans lequel le polyamide comprend un motif formé à partir d'une diamine (B2) ayant 12 atomes de carbone ou moins.

6. Film de polyamide flexible selon la revendication 4, dans lequel l'acide dicarboxylique (A2) ayant 12 atomes de carbone ou moins est l'acide téréphtalique.

7. Film de polyamide flexible selon la revendication 5, dans lequel la diamine (B2) ayant 12 atomes de carbone ou moins est la 1,10-décanediamine.

8. Film de polyamide flexible selon l'une quelconque des revendications 1 à 7, dans lequel le polyamide ne comprend pas de segments formés de polyéther ou de polyester.
